# EUROPÄISCHE PATENTANMELDUNG

(11) **EP 2 025 545 A1**
(43) Veröffentlichungstag der Anmeldung: **18.02.2009**
(21) Anmeldenummer: 08290780.9
(22) Anmeldetag: 15.08.2008
(51) Int. Cl.: B60H 3/00

(54) **Verfahren zum Austausch des FIlters einer Belüftungs-, Heizungs- und/oder Klimaanlage**

(30) Priorität: 17.08.2007 EP 07291021
(71) Anmelder: Behr France Rouffach SAS, 68250 Rouffach (FR)
(72) Erfinder: Klein, Henri, 68000 Colmar (FR)
(74) Vertreter: Mantel, Berthold Friedrich

(57) **Zusammenfassung**

Die Erfindung betrifft ein Verfahren zum Austausch des Filters einer Belüftungs-, Heizungs- und/oder Klimaanlage für ein Kraftfahrzeug, wonach ein als Erstausstattung vor dem vollständigen Zusammenbau oder dem Einbau der Belüftungs-, Heizungs- und/oder Klimaanlage in ein Kraftfahrzeug eingebauter erster Filter (2) zumindest teilweise mechanisch zerstört wird um ihn trotz beengter Platrverhältnisse ausbauen zu können und durch einen zweiten bieg- oder knickbaren Filter (21) oder einer Mehrzahl von Filtern (31a, 31b), der oder die zerstörungsfrei in die Belüftungs-, Heizungs- und/oder Klimaanlage ein- und ausbaubar sind, ersetzt wird.

## Beschreibung

Die Erfindung betrifft ein Verfahren zum Austausch des Filters einer Belüftungs-, Heizungs- und/oder Klimaanlage gemäß dem Oberbegriff des Anspruchs 1, sowie eine Belüftungs-, Heiz- oder Klimaanlage für ein Kraftfahrzeug gemäß dem Oberbegriff des Anspruchs 6.

Gehäuse von Belüftungs-, Heizungs- und/oder Klimaanlagen von Kraftfahrzeugen weisen einen oder mehrere Filter auf, die die Außenluft vor dem Einströmen in den Fahrgastraum von Verunreinigungen wie Pollen, Sporen oder Rußpartikeln befreien. Diese Filter können als Staubfilter, Kohleaktivfilter oder als Kombifilter konzipiert sein. Die vom Filter aufgenommenen Verunreinigungen lagern sich an der Oberfläche des Filters ab und behindern die Luft somit an der Durchströmung. Deswegen ist ein regelmäßiger Austausch des Filters notwendig, um den gewünschten Luftdurchsatz und eine gute Luftqualität zu gewährleisten. Bei modernen, bauraumoptimierten Fahrzeugen steht jedoch meist nicht genügend Platz zur Verfügung, den Filter vollständig aus dem Gehäuse heraus zu ziehen. Ein Ausbau des gesamten Gehäuses ist sehr zeit- und kostenintensiv.

In der Offenlegungsschrifft DE 102 45 252 A1 wird deswegen ein Filter vorgeschlagen der aus zwei, über ein Filmscharnier beweglich miteinander verbundenen, Teilen besteht. Durch die Knickbarkeit des Filters ist ein einfacherer Ein- und Ausbau des Filters in das, bzw. aus dem Gehäuse möglich. Solch ein Spezialfilter ist jedoch schwieriger herzustellen und somit teurer als ein herkömmlicher Standardfilter ohne Knickvorrichtung.

Aus der DE 10 2005 019 675 A1 ist eine Filtereinheit einer Belüftungsanlage bekannt, bei welcher ein Filter mit einem Deckel verbunden ist, wobei zwischen dem Filter und dem Deckel eine Sollbruchstelle vorgesehen ist.

Ausgehend von diesem Stand der Technik ist es die Aufgabe der Erfindung, ein einfaches und kostengünstiges Verfahren zur Wartung oder zum Austausch des Filters einer Belüftungs-, Heizungs- und/oder Klimaanlage für ein Kraftfahrzeug bereitzustellen.

Diese Aufgabe wird erfindungsgemäß durch ein Verfahren mit den Merkmalen des Anspruchs 1 gelöst. Vorteilhafte Ausgestaltungen sind Gegenstand der Unteransprüche.

Erfindungsgemäß ist ein Verfahren zum Austausch des Filters einer Belüftungs-, Heizungs- und/oder Klimaanlage für ein Kraftfahrzeug vorgesehen, wonach ein als Erstausstattung vor dem vollständigen Zusammenbau oder dem Einbau der Belüftungs-, Heizungs- und/oder Klimaanlage in ein Kraftfahrzeug eingebauter erster Filter zumindest teilweise mechanisch zerstört wird um ihn trotz beengter Platzverhältnisse ausbauen zu können und durch einen zweiten bieg- oder knickbaren Filter (21) oder eine Mehrzahl von Filtem, der oder die zerstörungsfrei in die Belüftungs-, Heizungs- und/oder Klimaanlage ein- und ausbaubar sind, ersetzt wird.

Als Erstausstattung beinhaltet die Belüftungs-, Heizungs- und/oder Klimaanlage einen nicht knick- oder biegbaren Standardfilter, der einfach herzustellen und somit kostengünstig ist. Beim Ausbau wird der Filter z.B. geknickt oder zerbrochen, wodurch er vollständig aus dem Gehäuse heraus zu bewegen ist. Der Austauschfilter ist ein bieg- oder knickbarer Filter z.B. nach Art des angegebenen Stands der Technik, ein vergleichbarer Filter oder eine Mehrzahl von Filtern, insbesondere zwei oder drei. Bei der Verwendung mehrerer Filter als Austauschfilter, sind diese in ihren Abmessungen jeweils kleiner ausgeführt als der, als Erstausstattung vorgesehene Standardfilter. Insbesondere ist die Gesamtgröße bzw. das Gesamtvolumen der Mehrzahl von Filtern im Wesentlichen gleich groß wie die die Gesamtgröße bzw. das Gesamtvolumen des Standardfilters. Dadurch ist ein einfacher Ein- und Ausbau in das, bzw. aus dem Gehäuse möglich.

Vorzugsweise ist die zumindest teilweise mechanische Zerstörung irreversibel und erfolgt z.B. durch Knicken oder durch Bruch und Trennung in zumindest zwei Teile.

Bevorzugt wird der Filter zumindest ein Stück weit, insbesondere über die Hälfte seiner Länge, aus dem Gehäuse herausbewegt, zumindest teilweise mechanisch zerstört und anschließend vollständig aus dem Gehäuse herausbewegt und ein zweiter Filter oder eine Mehrzahl zweiter Filter zerstörungsfrei in das Gehäuse eingebaut. Der Filter wird teilweise, idealerweise bis zum Anschlag an einer anderen Fahrzeugkomponente oder bis kurz davor, aus dem Gehäuse herausgezogen. Anschließend wird er z.B. geknickt oder zerbrochen um seinen Platzbedarf in Vertikalrichtung zu verringern und so ein Herausbewegen des kompletten Filters aus dem Gehäuse zu ermöglichen. Als Ersatz wird z.B. ein bieg- oder schwenkbarer Filter verwendet, der zerstörungsfrei in das Gehäuse eingebaut werden kann und ohne Einschränkungen funktioniert.

Bei einer Belüftungs-, Heizungs- oder Klimaanlage für ein Kraftfahrzeug mit einem Gehäuse das eine durch einen Deckel verschließbare Filterwartungsöffnung aufweist und einem Filter, ist der Filter im in das Fahrzeug eingebauten Zustand der Belüftungs-, Heizungs- und/oder Klimaanlage aufgrund beengter Platzverhältnisse nur unter zumindest teilweiser Zerstörung über die verschlossene Filterwartungsöffnung ausbaubar. Da der Filter größer ist als der zum Herausziehen zur Verfügung stehende Raum, ist eine Änderung der Ausdehnungsrichtung bzw. der Auszugsrichtung des Filters notwendig. Diese Änderung kann nur unter zumindest teilweiser Zerstörung erfolgen. Die zumindest teilweise mechanische Zerstörung erfolgt dabei insbesondere in einem Bereich der Filterfläche, also in einem Bereich in welchem sich das eigentliche Filtermaterial wie ein Vlies, insbesondere plissiert oder eine Aktivkohleschicht befindet.

Dadurch, dass das Gehäuse der Belüftungs-, Heizungs- oder Klimaanlage eine Filterwartungsöffnung aufweist, kann der Filter ohne Zerstörung des Gehäuses aus diesem ausgebaut werden.

In einem bevorzugten Ausführungsbeispiel ist die Filterwartungsöffnung an der Unterseite oder an der Oberseite des Gehäuses angeordnet. Nach oben oder unten steht der meiste Platz für den Ein- und Ausbau des Filters zur Verfügung, da das Gehäuse an den Seiten meist von anderen Fahrzeugkomponenten vollständig umschlossen ist. Bei ausreichend Bauraum ist jedoch auch eine seitliche Anordnung der Filterwarturigsöffnung möglich.

Dadurch dass, die Filterwartungsöffnung durch zumindest einen Deckel verschließbar ist wird verhindert, dass der Filter ungewollt aus dem Gehäuse heraus fällt und/oder dass Schmutz in das Filtergehäuse gelangt und den Filter verunreinigt.

Der Deckel ist bevorzugt mittels Clips- oder Steckverbindung oder mittels Klammem am Gehäuse angeordnet. Diese Verbindungen erlauben ein mehrmaliges Anbringen und Entfernen des Deckels.

Alternativ kann in einem weiteren Ausführungsbeispiel der Deckel einstückig mit dem Gehäuse verbunden sein. Dies macht eine gesonderte Herstellung des Deckels nicht erforderlich.

Vorzugsweise weist der Verbindungsbereich zwischen Deckel und Gehäuse eine Sollbruchstelle auf. Dadurch ist ein einfacheres Trennen des Deckels vom Gehäuse möglich. Ein erneutes Anbringen des Deckels am Gehäuse ist z.B. durch Kleben oder Anschrauben denkbar.

Im Folgenden wird die Erfindung anhand eines Ausführungsbeispiels in Bezugnahme auf die anliegenden Zeichnungen näher erläutert.
Fig. 1 zeigt eine Belüftungs-, Heizungs- und/oder Klimaanlage für ein Kraftfahrzeug mit einem Gehäuse und einem Filter, wie sie zum Ausgangszeitpunkt des erfindungsgemäßen Verfahrens vorliegt.
Fig. 2 zeigt die Belüftungs-, Heizungs- und/oder Klimaanlage nach dem Bruch eines ersten Filters.
Fig. 3 zeigt die Belüftungs-, Heizungs- und/oder Klimaanlage beim Einsetzen eines zweiten Filters.
Fig. 4 zeigt die Belüftungs-, Heizungs- und/oder Klimaanlage am Ende des erfindungsgemäßen Verfahrens.
Fig. 5 zeigt die Belüftungs-, Heizungs- und/oder Klimaanlage beim Einsetzen einer Mehrzahl von zweiten Filtern.

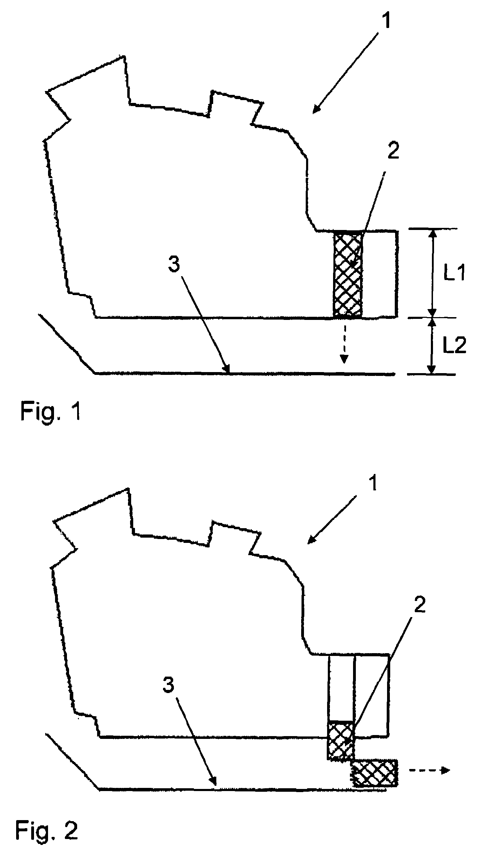

Das Ausführungsbeispiel in Fig. 1 zeigt das Gehäuse 1 einer Belüftungs-, Heizungs- und/oder Klimaanlage für ein Kraftfahrzeug mit einem Filter 2, der hier in einem Auslasskanal des Gehäuses 1 angeordnet ist. Die Position des Filters 2 kann jedoch variieren, sodass der Filter 2 auch weiter im Gehäuse 1, in einem Einlasskanal oder in einem anderen Auslasskanal untergebracht sein kann. Eine Fahrzeugkomponente 3, hier unterhalb des Gehäuses 1, behindert das Herausziehen des Filters 2 aus dem Gehäuse 1 in Richtung des gestrichelten Pfeils, da der Abstand L2 zwischen Gehäuseboden und Fahrzeugkomponente 3 deutlich kleiner ist als die Länge L1 des Filters 2. Die Fahrzeugkomponente 3 kann z.B. einen Teil der Innenverkleidung eines Fahrzeugs, den Fahrzeugboden oder ein Armaturenbrett darstellen.

In Fig. 2 ist der Filter 2 teilweise aus dem Gehäuse 1 herausgezogen und zerbrochen. Der Abstand zwischen Gehäuseunterseite und Fahrzeugkomponente 3 reicht nun aus, um den Filter 2 vollständig in Richtung des gestrichelten Pfeils aus dem Gehäuse 1 heraus zu ziehen. Würde man einen gleichen Filter 2 einbauen, müsste dieser ebenfalls abgeknickt werden. Insbesondere bei Verwendung von Vliesmaterialien für den Filter 2 werden die Fasern durch das Abknicken teilweise zerstört, sodass die Filterfläche Beschädigungen erfährt, die die eine gute Funktionsweise nicht mehr homogen über die Filterfläche gewährleistet.

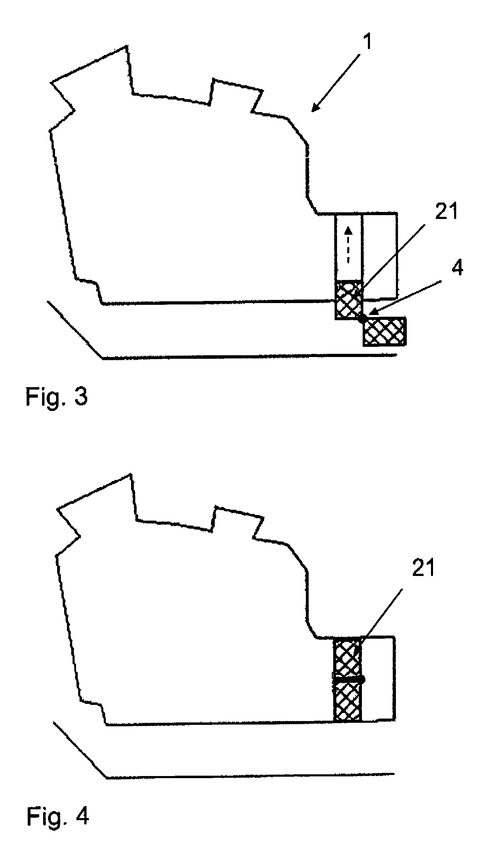

Daher wird, wie in Fig. 3 gezeigt, ein schwenkbarer Filter 21 in Pfeilrichtung in das Gehäuse 1 eingebracht. Durch das Schwenken, z.B. über ein Filmscharnier 4, benötigt der Filter 21 weniger Platz in vertikaler Richtung und lässt sich somit zerstörungsfrei in das Gehäuse 1 einführen. Ist der Filter 21 in etwa bis zum Filmscharnier 4 in das Gehäuse eingeschoben, kann er umgeklappt werden, so dass beide Teile des Filters 21 im Wesentlichen in einer Linie liegen. Anschließend kann der Filter 21 vollständig in das Gehäuse 1 geschoben werden.

Fig. 4 zeigt den Filter 21 vollständig im Gehäuse 1 untergebracht. Die Filterwartungsöffnung, durch die der Filter 21 in das Gehäuse 1 eingebracht wird, kann mittels Deckel verschlossen werden.

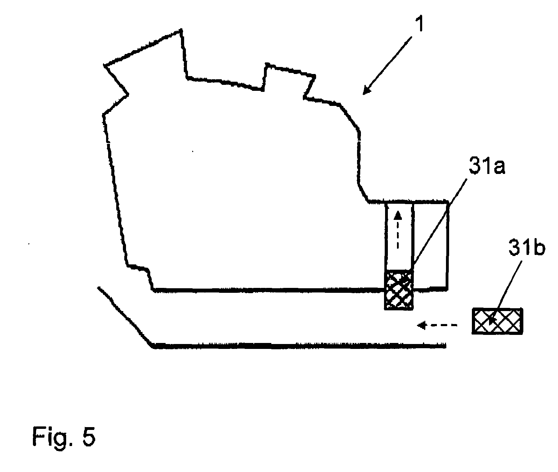

Eine Alternative zu dem in Fig. 3 dargestellten Einbringen eines schwenkbaren Filters 21 als Austauschfilter, ist in Fig.5 gezeigt. Nach dem Entfernen des als Erstausrüstung dienenden Filters 2, wie in den Figuren 1 und 2 dargestellt, werden zwei Filter 31 in die Filteraufnahme in das Gehäuse 1 eingeschoben. Nach dem Einschieben des ersten Filters 31 a wird der zweite Filter 31 b eingebracht, sodass die beiden Filter zusammen im Wesentlichen die gleiche Gesamtausdehnung, insbesondere in einer Ebene senkrecht zur Durchströmungsrichtung des Filters 31 aufweisen. Die einzelnen Längen der Filter 31 sind dabei kleiner als L2. Alternativ können auch mehr als zwei Filter verwendet werden.

## Patentansprüche

1. Verfahren zum Austausch des Filter einer Belüftung-, Heizungs- und/oder Klimaanlage für ein Kraftfahrzeug, wonach ein als Erstausstattung vor dem vollständigen Zusammenbau oder dem Einbau der Belüftungs-, Heizungs- und/oder Klimaanlage in ein Kraftfahrzeug eingebauter erster Filter (2) zumindest teilweise mechanisch zerstört wird um ihn trotz beengter Platzverhältnisse ausbauen zu können und durch einen zweiten bieg- oder knickbaren Filter (21) oder einer Mehrzahl von Filtern (31a, 31b), der oder die zerstörungsfrei in die Belüftungs-, Heizungs- und/oder Klimaanlage ein- und ausbaubar sind, ersetzt wird.

2. Verfahren nach Anspruch 1, **dadurch gekennzeichnet, dass** die zumindest teilweise mechanische Zerstörung irreversibel ist.

3. Verfahren nach Anspruch 1 oder 2, **dadurch gekennzeichnet, dass** die zumindest teilweise mechanische Zerstörung durch Bruch und Trennung in zumindest zwei Teile erfolgt.

4. Verfahren nach Anspruch 1 oder 2, **dadurch gekennzeichnet, dass** die zumindest teilweise mechanische Zerstörung durch Knicken erfolgt.

5. Verfahren nach einem der vorhergehenden Ansprüche, **dadurch gekennzeichnet, dass** der erste Filter (2) zumindest ein Stück weit aus dem Gehäuse (1) der Belüftungs-, Heizungs- und/oder Klimaanlage herausbewegt, zumindest teilweise mechanisch zerstört und anschließend vollständig aus dem Gehäuse (1) entnommen wird.

6. Belüftungs-, Heizungs- oder Klimaanlage für ein Kraftfahrzeug mit einem Gehäuse (1), das eine durch einen Deckel verschließbare Filterwartungsöffnung aufweist, und einem Filter (2), **dadurch gekennzeichnet, dass** der Filter (2) im in das Fahrzeug eingebauten Zustand der Belüftungs-, Heizungs- und/oder Klimaanlage aufgrund beengter Platzverhältnisse nur unter zumindest teilweiser Zerstörung über die verschlossene Filterwartungsöffnung ausbaubar ist.

7. Belüftungs-, Heizungs- oder Klimaanlage für ein Kraftfahrzeug nach Anspruch 7, **dadurch gekennzeichnet, dass** die Filterwartungsöffnung an der Unter- oder an der Oberseite des Gehäuses (1) angeordnet ist.

8. Belüftungs-, Heizungs- oder Klimaanlage für ein Kraftfahrzeug nach einem der Ansprüche 6 oder 7, **dadurch gekennzeichnet, dass** der Deckel der Filterwartungsöffnung am Gehäuse (1) mittels Clips- oder Steckverbindung oder mittels Klammern am Gehäuse (1) angeordnet ist.

9. Belüftungs-, Heizungs- oder Klimaanlage für ein Kraftfahrzeug nach einem der Ansprüche 6 oder 7, **dadurch gekennzeichnet, dass** der Deckel der Filterwartungsöffnung einstückig mit dem Gehäuse (1) verbunden ist.

10. Belüftungs-, Heizungs- oder Klimaanlage für ein Kraftfahrzeug nach Anspruch 9, **dadurch gekennzeichnet, dass** der Verbindungsbereich zwischen Deckel und Gehäuse (1) eine Sollbruchstelle aufweist.
